# EUROPÄISCHE PATENTSCHRIFT

(11) **EP 0 402 687 B1**
(45) Veröffentlichungstag und Bekanntmachung des Hinweises auf die Patenterteilung: **02.02.1994**
(21) Anmeldenummer: 90110025.5
(22) Anmeldetag: 26.05.1990
(51) Int. Cl.: C01G 33/00

(54) **Nioboxidpulver (Nb205) sowie Verfahren zu dessen Herstellung**
Niobium oxide powder (Nb205) and process for its preparation
Poudre d'oxyde de niobium (Nb205) et procédé de sa préparation

(30) Priorität: 08.06.1989 DE 3918691
(43) Veröffentlichungstag der Anmeldung: 19.12.1990
(73) Patentinhaber: H.C. Starck GmbH & Co. KG, 38642 Goslar (DE)
(72) Erfinder: Bludssus, Walter, Dr., D-3387 Vienenburg 6 (DE); Feuerhahn, Erik-Rüdiger, Dr., D-3360 Osterode (DE); Zimmermann, Horst, D-3388 Bad Harzburg (DE)
(74) Vertreter: Steiling, Lothar, Dr.

(56) Entgegenhaltungen:
- DE-A- 3 428 788
- ULLMANNS ENZYKLOPAEDIE DER TECHNISCHEN CHEMIE, 4. Auflage, Band 17, Seiten 306, 307, 1979

## Beschreibung

Die vorliegende Erfindung betrifft ein verbessertes Nioboxidpulver (Nb₂O₅), welches zu > 90 % aus T-Phase bsteht, einen Fluorwert < 1000 ppm aufweist, ein 45 µm-Sieb zu > 99,9 Gew.-% passiert, mit einer spezifischen Oberfläche nach BET (ASTM D 3037/81) von mehr als 3.5 m²/g und einem Nb₂O₅-Gehalt > 99,8 Gew.-%, ohne Berücksichtigung des Glühverlustes sowie ein Verfahren zur Herstellung dieses Nioboxidpulvers.

Ta₂O und Nb₂O₅ werden üblicherweise mit einem Säuregemisch aus HF und H₂SO₄ aufgeschlossen. Die in wäßrigen Mineralsäuren gelösten Fluorokomplexe der beiden Elemente extrahiert man mit organischen Lösemitteln, vorzugsweise mit Methylisobutylketon (MIBK). Anschließend reextrahiert man die Niobfluorosäure aus der organischen Phase und fällt aus der wäßrigen Strip-Lösung das Nioboxidhydrat mit Ammoniak-Wasser, Daran schließt sich die Filtration des Feststoffs, die Trocknung und Calcination bei Temperaturen oberhalb ca. 1000°C an (Ullmanns Enzyklopädie der techn. Chemie, 4. Auflage, 1979, Band 17).

Aus der DE-A-34 28 788 geht ein Verfahren zur Herstellung von Nioboxid-Pulver hervor, bei dem die Fällung mit zudosiertem flüssigem Ammoniak durchgeführt wird. Die Calzination geschieht bei 1000° C.

Die auf diese Weise hergestellten Oxide finden Verwendung bei der Herstellung von Carbiden für Hartmetalle, beim Erschmelzen von Ferrolegierungen sowie als Rohstoff für optische Glaser und für elektrokeramische und elektrooptische Produkte. Seit einiger Zeit wird Nb₂O₅ in steigendem Maße in keramischen Kondensatoren verwendet, speziell in den sogenannten Relaxor-Perovskiten. (Lit.: Swartz and Shrout, 'Fabrication of Perovskite Lead Magnesium Niobate', Mat. Res. Bull., Vol. 17, pp. 1245-1250, 1982).

Die derzeit angebotenen Nb₂O₅-Pulver sind in verschiedener Hinsicht für den letztgenannten Einsatzzweck nur bedingt geeignet. Aufgabe dieser Erfindung ist die Bereitstellung entsprechender Pulver.

Es wurde nun gefunden, daß diese Anforderungen erfüllt werden durch Nioboxidpulver, welche in nicht-agglomerierter Form als feines Pulver mit enger Kornverteilung und Uniformität der Partikel vorliegen. Ein zusätzliches Kennzeichen besteht in einer möglichst großen spezifischen Oberfläche (BET-Oberfläche). Außerdem muß eine sehr hohe Reinheit gewährleistet sein.

Gegenstand dieser Erfindung ist ein Nioboxid (Nb₂O₅)-Pulver, welches
a) zu > 90 Gew.-% aus T-Phase besteht,
b) einen Fluorwert < 1000 ppm aufweist,
c) ein 45 µm-Sieb zu > 99,9 Gew.-% passiert, mit
d) einer spezifischen Oberfläche nach BET (ASTM D 3037/81) von mehr als 3,5 m²/g und einem
e) Nb₂O₅-Gehalt > 99,8 Gew.-%, ohne Berücksichtigung des Glühverlustes, welches
dadurch gekennzeichnet ist, daß es einen Gehalt an
Fe von 2 bis 20 ppm und
Ni von 2 bis 30 ppm aufweist.

Besonders bevorzugt ist ein entsprechendes Nb₂O₅-Pulver, welches eine Korngrößenverteilung nach Sedigraph 5000 D (ASTM B 761-86)
90 Gew.-% < 2,5 µm,
50 Gew.-% 1,0 µm, vorzugsweise 0,5 bis 0,7 µm,
30 Gew.-% 0,6 µm aufweist.

Gegenstand dieser Erfindung ist auch ein Verfahren zur Herstellung des erfindungsgemäßen Nioboxid-Pulvers. Dieses besteht aus einer Kombination im einzelnen bekannter Verfahrensschritte durch Fällung von Nioboxidhydrat mit Ammoniak aus einer fluoridhaltigen Lösung mit anschließender Filtration, Waschung, Glühung und Mahlung, wobei
a) das Fällen des Nioboxidhydrates aus vorgelegter wäßriger Ammoniaklösung erfolgt.
b) der bei der Filtration anfallende Filterkuchen nach dem Waschen soweit getrocknet wird, daß das Trockenprodukt einen Glühverlust von 10 bis 50 Gew.-%, vorzugsweise von 20 bis 30 Gew.-%, aufweist,
c) das Trockenprodukt bei Temperaturen von 800° C bis 900° C calziniert und
d) das so erhaltene Röstgut anschließend fein gemahlen wird.

Die Calzination kann in den bekannten Aggregaten durchgeführt werden. Besonders wirtschaftlich hat sich die Calzination im Drehrohrofen erwiesen. Hierbei sollte die Verweilzeit von mindestens 1 Stunde, vorzugsweise mindestens 2 Stunden, eingehalten werden.

Besonders gute Resultate werden erzielt, wenn beim erfindungsgemäßen Verfahren der Filterkuchen so gewaschen wird, daß er weniger als 0,5 Gew.-% Fluor enthält.

Zur Erzielung eines besonders geeigneten Nb₂O₅-Pulvers hat sich die Feinmahlung in einer Strahlmühle bewährt.

Im folgenden wird die Erfindung beispielhaft erläutert, ohne daß hierin eine Einschränkung zu sehen ist.

### Beispiel

Zu 7 m³ einer 3%igen wäßrigen Ammoniak-Lösung werden 2,5 m³ Niob-Fluoridlösung aus der Reextraktion mit einer Beladung von ca. 120 g Nb₂O₅/l gegeben und die Mischung weiterhin mit 25%igem Ammoniak-Wasser versetzt, bis sich ein pH-Wert von 9 einstellt. Das gefällte Oxidhydrat wird über einen Plattenfilter abgetrennt und mit 7 m³ 3%igem Ammoniakwasser und 6 m³ entmineralisiertem Wasser neutralgewaschen. Der Fluorgehalt des Filterkuchens ist danach kleiner als 0,5 Gew.-%. Der Filterkuchen wird getrocknet. Der Glühverlust einer Probe des getrockneten Materials beträgt dann ca. 20 Gew.-%. Die Weiterverarbeitung des Rohproduktes erfolgt in einem Drehrohr bei 900°C und einer Verweilzeit von 2 Stunden. Das geglühte Oxid wird anschließend in einer Strahlmühle zerkleinert.

### Physikalische und chemische Analyse

| | |
|---|---|
| Spezifische Oberfläche (BET): | 4,26 m²/g |
| Kornspektrum (Sedigraph 5000 D): nach ASTM B 761-86 | 90 % < 1 µm |
| | 50 % < 0,56 µm |
| | 30 % < 0,48 µm |
| Siebanalyse: | 99,9 % < 45 µm |
| Anteil an T-Phase: | > 90 Gew.-% |

Charakteristische Verunreinigungen:

| | |
|---|---|
| Fluor: | 360 ppm |
| Calcium: | 8 ppm |
| Chrom: | < 2 ppm |
| Eisen: | 3 ppm |
| Nickel: | 4 ppm |
| Tantal: | < 12 ppm |

## Patentansprüche

1. Nioboxid (Nb₂O₅)-Pulver, welches
a) zu > 90 Gew.-% aus T-Phase besteht,
b) einen Fluorwert < 1000 ppm aufweist,
c) ein 45 µm-Sieb zu > 99,9 Gew.-% passiert, mit
d) einer spezifischen Oberfläche nach BET (ASTM D 3037/81) von mehr als 3.5 m²/g und einem
e) Nb₂O₅-Gehalt > 99,8 Gew.-%, ohne Berücksichtigung des Glühverlustes, welches
dadurch gekennzeichnet ist, daß es einen Gehalt an
Fe von 2 bis 20 ppm und
Ni von 2 bis 30 ppm aufweist.

2. Nioboxid-Pulver, dadurch gekennzeichnet, daß es eine Korngrößenverteilung nach Sedigraph 5000 D (ASTM B 761-86)
90 Gew.-% < 2,5 µm,
50 Gew.-%<1,0 µm (vorzugsweise 0,5 bis 0,7 µm),
30 Gew.-%<0,6 µm aufweist.

3. Verfahren zur Herstellung von Nb₂O₅-Pulver gemäß einem der Ansprüche 1 oder 2 durch Fällen von Nioboxidhydrat mit Ammoniak aus einer fluoridhaltigen Lösung mit anschließender Filtration, Waschung, Glühung und gegebenenfalls Mahlung, dadurch gekennzeichnet, daß
a) das Fällen des Nioboxidhydrates aus vorgelegter wäßriger Ammoniaklösung erfolgt.
b) der bei der Filtration anfallende Filterkuchen nach dem Waschen soweit getrocknet wird, daß das Trockenprodukt einen Glühverlust von 10 bis 50 Gew.-%, vorzugsweise von 20 bis 30 Gew.-%, aufweist,
c) das Trockenprodukt bei Temperaturen von 800° C bis 900° C calziniert und
d) das so erhaltene Röstgut anschließend fein gemahlen wird.

4. Verfahren gemäß Anspruch 3, dadurch gekennzeichnet, daß die Calzination in einem Drehrohrofen durchgeführt wird.

5. Verfahren gemäß Anspruch 4, dadurch gekennzeichnet, daß die Calzination mit einer Verweilzeit von mindestens 1 Stunde, vorzugsweise mindestens 2 Stunden, durchgeführt wird.

6. Verfahren zur Herstellung von Nb₂O₅Pulver gemäß einem oder mehreren der Ansprüche 3 bis 5, dadurch gekennzeichnet, daß der Filterkuchen so gewaschen wird, daß er weniger als 0,5 Gew.-% Fluor enthält.

7. Verfahren gemäß einem oder mehreren der Ansprüche 3 bis 6, dadurch gekennzeichnet, daß die Feinmahlung des Röstgutes in einer Strahlmühle durchgeführt wird.

## Claims

1. Niobium oxide (Nb₂O₅) powder
a) of which > 90% by weight consists of T phase,
b) which has a fluorine value of < 1000 ppm,
c) of which > 99.9% by weight passes through a 45 µm sieve and
d) which has a BET specific surface (ASTM D 3037/81) of more than 3.5 m²/g and
e) an Nb₂O₅ content of > 99.8% by weight disregarding the ignition loss,
characterized in that it has an Fe content of 2 to 20 ppm and an Ni content of 2 to 30 ppm.

2. Niobium oxide powder, characterized in that it has a Sedigraph 500 D (ASTM B 761-86) particle size distribution of
90% by weight < 2.5 µm,
50% by weight < 1.0 µm (preferably 0.5 to 0.7 pm) and
30% by weight < 0.6 µm.

3. A process for the production of the Nb₂O₅ powder claimed in claim 1 or 2 by precipitation of hydrated niobium oxide with ammonia from a fluoride-containing solution and subsequent filtration, washing, calcination and optionally grinding, characterized in that
a) the hydrated niobium oxide is precipitated from aqueous ammonia solution,
b) the filter cake accumulating during the filtration step is dried after washing to such an extent that the dry product has an ignition loss of 10 to 50% by weight and preferably 20 to 30% by weight,
c) the dry product is calcined at temperatures of 800 to 900°C and
d) the calcined product obtained is finely ground.

4. A process as claimed in claim 3, characterized in that the calcination step is carried out in a revolving tube furnace.

5. A process as claimed in claim 4, characterized in that the calcination step is carried out over a period of at least 1 hour and preferably over a period of at least 2 hours.

6. A process for the production of Nb₂O₅ powder as claimed in one or more of claims 3 to 5, characterized in that the filter cake is washed in such a way that it contains less than 0.5% by weight fluorine.

7. A process as claimed in one or more of claims 3 to 6, characterized in that the fine grinding of the calcined product is carried out in a jet mill.

## Revendications

1. Oxyde de niobium (Nb₂O₅) en poudre, qui
a) est constitué à plus de 90 % en poids de phase T,
b) présente un indice de fluor de moins de 1000 ppm,
c) traverse à plus de 99,9 % en poids un tamis de 45 µm avec
d) une surface spécifique selon la méthode BET (ASTM D 3037/81) de plus de 3,5 m²/g et
e) une teneur en Nb₂O₅ supérieure à 99,8 % en poids, sans tenir compte de la perte par calcination,
qui est caractérisé en ce qu'il présente une teneur en fer de 2 à 20 ppm et une teneur en nickel de 2 à 30 ppm.

2. Oxyde de niobium en poudre, caractérisé en ce qu'il présente une répartition des diamètres de grain d'après la méthode au Sedigraph 5000 D (ASTM B 761-86) de
90 % en poids en dessous de 2,5 µm,
50 % en poids en dessous de 1,0 µm (de préférence 0,5 à 0,7 µm),
30 % en poids en dessous de 0,6 µm.

3. Procédé de production de Nb₂O₅ en poudre suivant l'une des revendications 1 et 2 par précipitation d'oxyde de niobium hydraté avec l'ammoniac dans une solution contenant un fluorure, suivie d'une filtration, d'un lavage, d'une calcination et le cas échéant d'un broyage, caractérisé en ce que
a) la précipitation de l'oxyde hydraté de niobium est effectuée dans une solution aqueuse ammoniacale préparée à l'avance,
b) le gâteau de filtre obtenu lors de la filtration est séché après lavage dans une mesure suffisante pour que le produit sec présente une perte par calcination de 10 à 50 % en poids, de préférence de 20 à 30 % en poids,
c) le produit sec est calciné à des températures de 800°C à 900°C et
d) le produit de calcination ainsi obtenu est ensuite broyé en fines particules.

4. Procédé suivant la revendication 3, caractérisé en ce que la calcination est conduite dans un four tubulaire tournant.

5. Procédé suivant la revendication 4, caractérisé en ce que la calcination est effectuée avec une durée de séjour d'au moins 1 heure, de préférence d'au moins 2 heures.

6. Procédé de production de Nb₂O₅ en poudre suivant une ou plusieurs des revendications 3 à 5, caractérisé en ce que le gâteau de filtre est lavé de manière qu'il contienne moins de 0,5 % en poids de fluor.

7. Procédé suivant une ou plusieurs des revendications 3 à 6, caractérisé en ce que le broyage en fines particules de la matière calcinée est effectué dans un broyeur à jets.
